(19) Europäisches Patentamt
European Patent Office
Office européen des brevets

(11) Veröffentlichungsnummer: **0 167 772**
**B1**

(12) # EUROPÄISCHE PATENTSCHRIFT

(45) Veröffentlichungstag der Patentschrift: **21.09.88**

(51) Int. Cl.⁴: **C 08 F 2/22**

(21) Anmeldenummer: **85106506.0**

(22) Anmeldetag: **28.05.85**

(54) **Verfahren zur Herstellung hochmolekularer Thermoplastharze.**

(30) Priorität: **08.06.84 DE 3421354**

(43) Veröffentlichungstag der Anmeldung: **15.01.86 Patentblatt 86/3**

(45) Bekanntmachung des Hinweises auf die Patenterteilung: **21.09.88 Patentblatt 88/38**

(84) Benannte Vertragsstaaten: **BE DE FR GB IT NL**

(56) Entgegenhaltungen:
**FR-A-2 180 748**
**US-A-3 248 356**

(73) Patentinhaber: **BAYER AG, Konzernverwaltung RP Patentabteilung, D-5090 Leverkusen 1 Bayerwerk (DE)**

(72) Erfinder: **Eichenauer, Herbert, Dr., Goethestrasse 71, D-4047 Dormagen 1 (DE)**
Erfinder: **Ott, Karl- Heinz, Dr., Paul- Klee- Strasse 54, D-5090 Leverkusen 1 (DE)**

**EP 0 167 772 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zur Herstellung von hochmolekularen unvernetzten Vinylpolymerisaten durch Emulsionspolymerisation.

Während sich bei der radikalisch initiierten Polymerisation das Molekulargewicht durch Zugabe von regelnden Substanzen wie Mercaptanen oder halogenierten Kohlenwasserstoffen leicht in gewünschter Weise herabsetzen läßt, gibt es bisher nur wenige Verfahren, die eine Erhöhung der Molekulargewichte erlauben.

Polymerisate mit sehr hohem Molekulargewicht sind jedoch für spezielle Awendungsgebiete wie z.B. in Beschichtungsmaterialien, zur Herstellung von Platten oder als Viskositätsregler von Interesse.

Das einfachste Verfahren, zu Polymerisaten mit hohem Molekulargewicht zu gelangen, ist der Zusatz einer vernetzend wirkenden Verbindung zum Monomeren oder Monomerengemisch. Die danach erhaltenen polymeren Substanzen sind jedoch in der Regel nicht mehr löslich und zeigen auch sonst die nicht immer gewünschten Eigenschaften makromolekularer Netzwerke.

Die Bildung hochmolekularer Polymerisate durch Emulsionspolymerisation läßt sich in speziellen Fällen durch Zusatz geeigneter Reagenzien oder durch den Einsatz besonderer Initiatorsysteme erreichen. So beschreibt z.B. das britische Patent 600 905 den Zusatz von Crotonsäure bei der Polymerisation von Vinylhalogeniden bzw. Vinylidenhalogeniden, das US-Patent 2 552 328 die Zugabe spezieller phenolischer Verbindungen bei der Ethylacrylat-Polymerisation und das US-Patent 3 459 699 die Verwendung von Dicyclopentadien bei der Herstellung von Acrylpolymeren.

Geeignete Initiatorsysteme zur Herstellung hochmolekularer Emulsionspolymerisate empfehlen D. Mikulášová et al. in European Polymer Journal 10, 551 - 556 (1974) (Gemische aus oxidiertem isotaktischem Polypropylen und Triethylentetramin) sowie die japanischen Patentschriften 52 084 269 und 57 117 502 (jeweils Peroxid/ Amin-Mischungen), während die DE-A-19 64 915 die Verwendung sehr geringer Persulfatmengen beschreibt.

Alle die oben beschriebenen Wege, mit Hilfe der Emulsionspolymerisation zu hochmolekularen unvernetzten Vinylpolymerisaten zu gelangen, sind jedoch nicht allgemein anwendbar, führen zu unbefriedigenden Ausbeuten oder benötigen den Einsatz spezieller Reagenzien.

Unter "Emulsionspolymerisation" wird dabei die Polymerisation in wäßriger Phase in Gegenwart oberflächenaktiver Substanzen, d.h. Emulgatoren, wie z.B. den Alkalimetallsalzen langkettiger Alkylsulfonsäuren oder langkettiger Fettsäuren verstanden.

Es ist auch bekannt, daß statt eines Emulgators alleine eine Kombination aus Emulgator und einem langkettigen Alkohol eingesetzt werden kann, wobei diese Mischungen vorhomogenisiert werden. Beispiele für den Einsatz solcher gemischter Emulgatorsysteme werden z.B. in DE-2A-6 28 665, DE-A-26 29 655 und DE-A-27 42 178 bei der Polymerisation von Vinylchlorid und von J. Ugelstad et al. in J. Polym. Sci., Polymer Letters 11, 503 - 513 (1973) und in Makromol. Chem. 175, 507 - 521 (1974) für die Styrolpolymerisation beschrieben.

Gegenstand der Erfindung ist ein Verfahren zur Herstellung von hochmolekularen unvernetzten Vinylpolymerisaten durch Emulsionspolymerisation, des dadurch gekennzeichnet ist, daß im Verfahrensschritt

A) ein Gemisch aus

a)1 bis 20 Gew.-Teilen Vinylmonomer bzw. Vinylmonomerengemisch,

b) 0,1 bis 3,0 Gew.-Teilen einer hydroxylgruppenhaltigen aliphatischen Kohlenwasserstoffverbindung mit 8 bis 22 Kohlenstoffatomen und

c) 80 bis 400 Gew.-Teilen Wasser bei Temperaturen zwischen 50°C und 65°C, vorzugsweise zwischen 55°C und 60°C, mit

d) 0,05 bis 0,5 Gew.-Teilen eines wasserlöslichen Initiators oder Initiatorsystems versetzt wird und nach einer Reaktionszeit von 5 Minuten bis 1 Stunde bei dieser Temperatur zu dem Reaktionsgemisch im Verfahrensschritt

B) getrennt

e) 80 bis 99 Gew.-Teile Vinylmonomer oder Vinylmonomerengemisch und

f) 0,1 bis 3,0 Gew.-Teile eines anionischen Emulgators in Form einer wäßrigen Lösung innerhalb einer Zeit von 1 bis 10 Stunden zudosiert werden und die Polymerisation zu Ende geführt wird.

Als Vinylmonomere sind alle Verbindungen geeignet, die in Emulsion zu thermoplastischen Harzen polymerisiert werden können, z.B. Vinylaromaten der Formel I oder Verbindungen der Formel II bzw. deren Gemische,

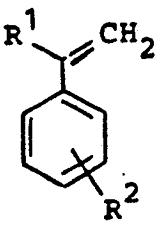

I

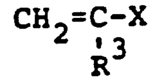

II

wobei $R^1$ Wasserstoff oder Methyl, $R^2$ Wasserstoff, Halogen oder Alkyl mit 1 bis 3 Kohlenstoffatomen in ortho-, meta- oder para-Stellung, $R^3$ Wasserstoff oder Ethyl und X eine CN- (= Cyano), $R^4OOC$- (= Ester) oder $R^6R^5NOC$- (= Amid)-gruppe darstellt. Hierbei bedeutet $R^4$ Wasserstoff oder Alkyl mit 1 bis 4 Kohlenstoffatomen; $R^5$ und $R^6$ unabhängig Wasserstoff, Phenyl oder Alkyl mit 1 bis 4 Kohlenstoffatomen.

Beispiele für Verbindungen vom Typ I sind Styrol, α-Methylstyrol, p-Methylstyrol und Vinyltoluol, Beispiele für Typ II sind (Meth)Acrylnitril und Methyl(meth)acrylat. Weitere geeignete Monomere sind z. B. Vinylacetat oder N-Phenylmaleinimid.

Bevorzugte Monomere sind Mischungen aus Styrol und Acrylnitril sowie aus Styrol, Acrylnitril und Methylmethacrylat.

Unter der Bezeichnung hydroxylgruppenhaltige aliphatische Kohlenwasserstoffverbindung werden Mono- oder Diole von $C_8$ bis $C_{22}$-Kohlenwasserstoffen, z. B. 1-Octanol, 1-Nonanol, 1-Decanol, 1,10-Decandiol, 9-Decen-1-ol, 1 -Undecanol, 10-Undecen-1-ol, 1-Dodecanol, 1,2-Dodecandiol, 1,12-Dodecandiol, 1-Tridecanol, 1-Tetradecanol, 1-Pentadecanol, 1-Hexadecanol, 2-Hexadecanol, 1,2-Hexadecanol, 1,16-Hexadecandiol, 9-Octadecen-1-ol, 1-Octadecanol, 3, 7, 11, 15-Tetramethyl-2-hexadecen-1-ol, 1-Docosanol bzw. Gemische daraus verstanden, wobei die Verbindungen mit 12 bis 18 Kohlenstoffatomen bevorzugt sind. Die Einsatzmengen betragen 0,1 bis 3,0 Gew.-Teile, vorzugsweise 0,5 bis 2,0 Gew.-Teile, (jeweils bezogen auf 100 Gew.-Teile Monomer).

Als wasserlösliche Initiatoren oder Initiatorsysteme werden z. B. Alkalisalze oder das Ammoniumsalz der Peroxodischwefelsäure oder Kombinationen solcher Verbindungen mit reduzierenden Substanzen wie Natriumdithionit oder dem Natriumsalz der Hydroxymethansulfinsäure in Mengen von 0,05 bis 0,5 Gew.-Teilen (bezogen auf 100 Gew.-Teile Monomer) eingesetzt. Bevorzugter Initiator ist Kaliumperoxodisulfat.

Geeignete anionische Emulgatoren sind beispielsweise die Natrium-, Kalium- oder Ammoniumsalze langkettiger Fettsäuren mit 10 bis 20 Kohlenstoffatomen, z. B. Kaliumoleat, Salze der disproportionierten Abietinsäure, Salze langkettiger Benzolsulfonate, z. B. Na-n-Dodecylbenzolsulfonat und Salze von langkettigen Sulfonsäuren, z. B. die Natriumsalze von $C_9$-$C_{18}$-Alkylsulfonsäure-Gemischen.

Vorzugsweise wird als hydroxylgruppenhaltige aliphatische Kohlenwasserstoffverbindung 1-Octadecanol oder 9-Octadecen-1-ol oder deren Gemisch und als anionischer Emulgator Natrium Dodecylbenzolsulfonat eingesetzt.

Wesentliches Merkmal des erfindungsgemäßen Verfahrens ist, daß in der ersten Stufe A nur ein Teil der Monomeren in Gegenwart von Wasser und einer hydroxylgruppenhaltigen Kohlenwasserstoffverbindung in Abwesenheit von Emulgatoren bei 50° C bis 65° C anpolymerisiert wird und erst danach in der Stufe B restliches Monomer und Emulgatorlösung getrennt zudosiert werden.

Im Vergleich mit den bisher bekannten Methoden zur Herstellung hochmolekularer Vinylpolymerisate ist das beanspruchte Verfahren einfacher und breiter anwendbar. Die erfindungsgemäß hergestellten Vinylpolymerisate sind unvernetzt, d.h. in geeigneten Lösungsmitteln vollständig klar löslich und besitzen Grenzviskositäten von 300 bis 1500 $cm^3/g$, vorzugsweise 350 bis 1000 $cm^3/g$ (gemessen in Dimethylformamid bei 25° C). Diesen Grenzviskositäten entsprechen durch Gelpermeationschromatographie oder Lichtstreuung bestimmte mittlere Molekulargewichte ($M_w$) von ca. 800 000 bis ca. 10 000 000.

**Beispiele und Vergleichsbeispiele**

In den folgenden Beispielen wurden die Grenzviskositäten mit einem Ubbelohde-Viskosimeter bei 25° C in Dimethylformamid als Lösungsmittel bestimmt und die Gewichtsmittelwerte der Molmassen durch Lichtstreuungsmessungen in Dimethylformamid mit einem Fica 50-Streulichtgerät der Firma ARL (Frankreich) ermittelt.

**Beispiel 1**

In einem Reaktor werden 360 g Styrol, 140 g Acrylnitril und 50 g 1-Octadecanol unter Rühren zusammen in 4090 g Wasser dispergiert, auf 58°C erwärmt und mit 7,5 g Kaliumpersulfat (gelöst in 660 g Wasser) versetzt. Nach 30 minütigem Rühren bei dieser Temperatur wird zu der Reaktionsmischung innerhalb 4 Stunden ein Gemisch aus 3240 g Styrol und 1260 g Acrylnitril und über einen separaten Zulauf eine Lösung von 25 g des Natriumsalzes von n-Dodecylbenzolsulfonsäure in 1250 g Wasser zudosiert. Nach einer Nachreaktionszeit wird der Latex mit Magnesiumsulfat/Essigsäure koaguliert und das erhaltene Polymerpulver bei 70°C im Vakuum getrocknet. Das so in einer Ausbeute von 91 % hergestellte Copolymerisat besitzt ein Molekulargewicht ($M_w$) von 3 130 000.

**Vergleichsbeispiele A bis F**

Die in Beispiel 1 beschriebene Reaktion wird unter Beibehaltung der Mengen, der Zeiten und der Temperatur wiederholt, wobei jedoch das 1-Octadecanol und das Natrium-n-dodecylbenzolsulfonat jeweils in dem in Tabelle 1 angegebenen Verfahrensschritt eingesetzt werden.

**Tabelle 1:** Einfluß der Emulgatordosierung auf die Grenzviskosität des resultierenden Polymeren

| **Beispiel** | Im Verfahrensschritt A im Reaktor vorgelegte Emulgatorkomponente | Im Verfahrensschritt B parallel zur Monomerdosierung zudosierte Emulgatorkomponente | Grenzviskosität des resultierenden Polymeren (gemessen in Dimethylformamid bei 25°C) |
|---|---|---|---|
| 1 | 1Octadecanol | Na-n-Dodecylbenzolsulfonat-Lösung | 772 $cm^3/g$ |
| A (Ver gleich) | Na-n-Dodecylbenzolsulfonat Lösung + 1-Octadecanol | - | 260 $cm^3/g$<br>260 $cm^3/g$ |
| B (Vergleich) | Na-n-Dodesylbenzolsulfonat-Lösung | 1-Octadecanol | 238 $cm^3/g$ |
| C (Vergleich) | -<br>- | Na-n-Dodecylbenzolsulfonat-Lösung + 1-Octadecanol | 232 $cm^3/g$ |
| D (Vergleich) | Na-n-Dodecylbenzolsulfonat-Lösung (50 % der Gesamtmenge) | Na-n-Dodecylbenzolsulfonat-Lösung (50 % der Gesamtmenge | 274 $cm^3/g$ |
| E (Vergleich) | Na-n-Dodecylbenzolsulfonat-Lösung | - | 272 $cm^3/g$ |
| F (Vergleich) | - | Na-n-Dodecylbenzolsulfonat-Lösung | 285 $cm^3/g$ |

Wie aus der Tabelle ersichtlich ist, führt nur das erfindungsgemäße Verfahren zu einem Polieren mit hoher Grenzviskosität, d.h. mit sehr hohem mittleren Molekulargewicht.

**Beispiel 2**

Ein Gemisch aus 270 g Styrol, 105 g Acrylnitril und 60 g 9-Octadecen-1-ol wird unter Rühren zusammen in 4090 g Wasser dispergiert, auf 58°C erwärmt und mit 7,5 g Kaliumpersulfat (gelöst in 660 g Wasser) versetzt. Nach 45 minütigem Rühren bei dieser Temperatur wird zu der Reaktionsmischung innerhalb 6 Stunden ein Gemisch aus 3330 g Styrol und 1295 g Acrylnitril und über einen separaten Zulauf eine Lösung von 20 g des Natriumsalzes von n-Dodecylbenzolsulfonsäure in 1250 g Wasser zudosiert. Nach einer Nachreaktionszeit wird der Latex mit Magnesiumsulfat/Essigsäure koaguliert und das erhaltene Polymerpulver bei 70°C im Vakuum getrocknet (Ausbeute 94 %). Die Grenzviskosität des Copolymeren beträgt 926 $cm^3/g$.

**Beispiel 3**

In einem Reaktor werden 262,5 g p-Methylstyrol, 87,5 g Acrylnitril und 40 g 9-Octadecen-1-ol unter Rühren in 4590 g Wasser dispergiert, auf 60°C erwärmt und mit 7,5 g Kaliumpersulfat (gelöst in 750 g Wasser) versetzt. Nach 45 minütigem Rühren wird zu der Reaktionsmischung innerhalb 4 Stunden ein Gemisch aus 3487,5 g p-Methylstyrol und 1162,5 g Acrylnitril und über einen separaten Zulauf eine Lösung von 20 g des Natriumsalzes von n-Dodecylbenzol-sulfonsäure in 1410 g Wasser zudosiert. Nach einer Nachreaktionszeit wird der Latex mit Magnesiumsulfat/Essigsäure koaguliert und das Polymerisat bei 70°C im Vakuum getrocknet (Ausbeute 94 %). Die Grenzviskosität des Copolymeren beträgt 465 $cm^3/g$.

**Beispiel 4**

Ein Geisch aus 125 g Styrol, 50 g Acrylnitril und 75 g Methylmethacrylat wird zusammen mit 60 g 1-Octadecanol in 5260 g Wasser dispergiert, wonach auf 58°C erwärmt, mit 7,5 g Kaliumpersulfat (gelöst in 850 g Wasser) versetzt und 30 Minuten lang bei dieser Temperatur gerührt wird. Danach wird ein Gemisch aus 2375 g Styrol, 950 g Acrylnitril und 1425 g Methylmethacrylat und über einen separaten Zulauf eine Lösung von 25 g des Natriumsalzes von n-Dodecylbenzolsulfonsäure in 1605 g Wasser im Laufe von 4 Stunden kontinuierlich zudosiert. Nach einer Nachreaktionszeit wird der Latex mit Magnesiumsulfat/Essigsäure koaguliert und das Polymerpulver bei 70°C im Vakuum getrocknet (Ausbeute 87 %). Das Terpolymerisat besitzt eine Grenzviskosität von 546 $cm^3/g$.

**Patentansprüche**

1. Verfahren zur Herstellung von hochmolekularen unvernetzten Vinylpolymerisaten durch Emulsionspolymerisation, dadurch gekennzeichnet, daß im Verfahrensschritt

A) ein Gemisch aus

a) 1 bis 20 Gew.-Teilen Vinylmonomer oder Vinylmonomerengemisch,

b) 0,1 bis 3,0 Gew.-Teilen einer hydroxylgruppenhaltigen aliphatischen Kohlenwasserstoffverbindung mit 8 bis 22 Kohlenstoffatomen und

c) 80 bis 400 Gew.-Teilen Wasser bei Temperaturen zwischen 50°C und 65°C, mit

d) 0,05 bis 0,5 Gew.-Teilen eines wasserlöslichen Initiators oder Initiatorsystems versetzt wird und nach einer Reaktionszeit von 5 Minuten bis 1 Stunde bei dieser Temperatur zu dem Reaktionsgemisch im Verfahrensschritt

B) getrennt

e) 80 bis 99 Gew.-Teile Vinylmonomer oder Vinylmonomerengemisch und

f) 0,1 bis 3,0 Gew.-Teile eines anionischen Emulgators in Form einer wäßrigen Lösung innerhalb einer Zeit von 1 bis 10 Stunden zudosiert werden und die Polymerisation zu Ende geführt wird.

2. Verfahren nach Anspruch 1, dadurch gekennzeichnet, daß als Vinylmonomere Styrol, α-Methylstyrol, p-Methylstyrol, Vinyltoluol, (Meth)Acrylnitril, Methyl(meth)acrylat, Vinylacetat, N-Phenylmaleinimid oder Gemische daraus eingesetzt werden.

3. Verfahren nach Anspruch 1, dadurch gekennzeichnet, daß als hydroxylgruppenhaltige aliphatische Kohlenwasserstoffverbindung ein Mono- oder ein Diol eingesetzt wird.

4. Verfahren nach Anspruch 1, dadurch gekennzeichnet, daß als hydroxylgruppenhaltige aliphatische Kohlenwasserstoffverbindung 1-Octadecanol oder 9-Octadecen-1-ol oder deren Gemische eingesetzt werden.

**Claims**

1. Process for the preparation of high molecular weight, uncross-linked vinyl polymers by emulsion polymerisation, characterised in that in process step A)

d. 0.05 to 0.5 parts by weight of a water-soluble initiator or initiator system is added to a mixture of

a) 1 to 20 parts by weight of vinyl monomer or a mixture of vinyl monomers,

b) 0.1 to 3.0 parts by weight of a hydroxyl group containing aliphatic hydrocarbon compound having 8 to 22 carbon atoms and

c) 8 to 400 parts by weight of water at temperatures of from 50°C to 65°C,

and after a reaction time of from 5 minutes to one hour at this temperature, the following are added separately to the reaction mixture in process step B) within a period of from 1 to 10 hours:

e) 80 to 99 parts by weight of vinyl monomer or a mixture of vinyl monomers and

f) 0.1 to 3.0 parts by weight of an anionic emulsifier in the form of an aqueous solution, and polymerisation is carried to completion.

2. Process according to Claim 1, characterised in that the vinyl monomers used are styrene, α-methylstyrene, p-methylstyrene, vinyltoluene, (meth)acrylonitrile, methyl(meth)acrylate, vinyl acetate, N-phenyl-maleimide or mixtures thereof.

3. Process according to claim 1, characterised in that the hydroxyl group-containing aliphatic hydrocarbon compound is a monohydroxyl or dihydroxyl compound.

4. Process according to claim 1, characterised in that the hydroxyl group-containing aliphatic hydrocarbon compound used is 1-octadecanol or 9-octadecen-1-ol or mixtures thereof.

**Revendications**

1. Procédé pour produire des polymères vinyliques non réticulés à poids moléculaire élevé, par polymérisation en émulsion, caractérisé en ce que, au stade

A) on fait réagir un mélange de

a) 1 à 20 % en poids de monomère vinylique ou de mélange de monomères vinyliques,

b) 0 à 3 % en poids d'un composé d'hydrocarbure aliphatique hydroxylé à 8 à 22 atomes de carbone, etrbone, et

c) 80 à 400 parties en poids d'eau à des températures comprises entre 50 et 60° C, avec

d) 0,05 à 0,5 g en poids d'un initiateur ou d'un système d'initiateurs solubles dans l'eau et, après une durée de réaction de 5 minutes à 1 heure, et à cette température, on ajoute au mélange réactionnel au stade

B) séparément

e) 80 à 99 parties en poids de monomère vinylique ou d'un mélange de monomères vinyliques, et

f) 0,1 à 3 parties en poids d'un émulsifiant anionique sous forme d'une solution aqueuse de manière dosée, en un laps de temps de 1 à 10 heures, puis la polymérisation est achevée.

2. Procédé selon la revendication 1, caractérisé en ce que l'on utilise comme monomère vinylique le styrène, l'α-méthylstyrène, le p-méthylstyrène, le vinyltoluène, le (méth)acrylonitrile, le (méth)acrylate de méthyle, l'acétate de vinyle, la N-phénylmalénimide ou des mélanges de ces composés.

3. Procédé selon la revendication 1, caractérisé en ce que l'on utilise comme composé hydrocarboné aliphatique hydroxylé, un mono- ou un diol.

4. Procédé selon la revendication 1, caractérisé en ce que l'on utilise comme composé hydrocarboné aliphatique hydroxylé, du 1-octadécanol ou du 9-octadécène-1-ol ou des mélanges de ces composés.